Europäisches Patentamt

European Patent Office

Office européen des brevets

(11) Publication number: **0 403 236**
**A2**

## EUROPEAN PATENT APPLICATION

(21) Application number: **90306413.7**

(22) Date of filing: **12.06.90**

(51) Int. Cl.5: **G01L 3/10**

(30) Priority: **14.06.89 GB 8913685**

(43) Date of publication of application:
**19.12.90 Bulletin 90/51**

(84) Designated Contracting States:
**DE FR GB IT**

(71) Applicant: **LUCAS INDUSTRIES public limited company**
**Great King Street**
**Birmingham, B19 2XF West Midlands(GB)**

(72) Inventor: **Harrison, Anthony William**
**63 Middle Park Road**
**Selly Oak, Birmingham, B29 4BH(GB)**

(74) Representative: **Spall, Christopher John et al**
**BARKER, BRETTELL & DUNCAN 138 Hagley Road**
**Edgbaston Birmingham B16 9PW(GB)**

(54) **Improvements in torque sensors.**

(57) A torque sensor responsive to bodily twisting of a shaft (1) about its main longitudinal axis comprises a torque indicating member (10) adapted to be displaced with respect to a neutral position in response to twisting movement of the shaft (1). A transmission tube (2) is provided for translating a signal dependent upon twisting movement of the shaft (1) into non-torsional displacement of the member (10).

FIG.1.

This invention relates to torque sensors.

Torque sensors may be used with servo mechanisms of the electric motor driven type. In one known kind of servo mechanism of the electric motor driven type a shaft connects an input and an output, and a torque sensor measures the input torque and sends a proportional signal to an electronic controller. The controller, in turn, uses that signal to find the magnitude and direction of the input and then sends appropriate control signals to the motor.

According to our invention a torque sensor responsive to bodily twisting movement of a shaft about its main longitudinal axis comprises a torque indicating member adapted to be displaced with respect to a neutral position in response to twisting movement of the shaft, and transmission means for translating a signal dependent upon twisting movement of the shaft into non-torsional displacement of the torque indicating member.

The non-torsioned displacement of the torque indicating member can be measured by suitable sensing means to produce a signal dependant upon the measure of torque produced by the twisting movement.

Conveniently the transmission means is so constructed and arranged that the extent by which the indicating member is displaced depends upon the magnitude of the signal dependent upon the extent of twist in a given length of the shaft between two reference points.

The transmission means may comprise a tube arranged to surround the shaft and coupled at one end to the shaft, and a force transmitting coupling is provided between a point on the tube spaced axially from the said one end and the torque indicating member and through which the said signal is transmitted to the torque indicating member.

Normally the two reference points on the shaft comprise the location at which the tube is coupled to the shaft, and a second point on the shaft spaced longitudinally from the inner end of the tube remote from the said one end.

The tube may be fixed to the shaft at the said one end by fixing means so that a twist in the shaft causes a relative angular movement to occur between the inner end of the tube remote from the fixing means and the shaft. The signal is therefore wholly dependent upon the actual bodily twist in the shaft.

Alternatively the tube may be coupled to the shaft at the said one end by means of a torsionally elastic portion so that the tube transmits to the torque indicating member a signal dependent upon the twist in the shaft, and the stiffness of the elastic portion. The sensor therefore produces a difference or error signal between the reference points.

The force transmitting coupling may comprise a lever in the form of a radial lug on the tube which projects radially outwards from the inner end of the tube, and means for coupling that lug to the torque indicating member.

In one construction the coupling may comprise a universal joint, suitably a ball and socket connection between the lug and the member.

Conveniently, in such a construction, the lug is provided with a radial slot defining the socket and a ball on the torque indicating member is received in the slot substantially without clearance.

Preferably the tube is supported at its inner end in such a manner that radial movement of the lug with respect of the shaft is substantially prevented.

This may be achieved by the provision of a split cone or collet which bears on an internal cone formation at the inner end of the tube and on the shaft, in combination with a spring acting on the outer end of the cone which is of greater area to urge the cone inwardly relatively towards the outer end of the tube.

In one construction in which the torque indicating member comprises a sensor plate mounted for rocking movement about a transverse axis which is normal to the longitudinal axis of the shaft and is fixed with respect to the shaft, the transverse axis may comprise a fulcrum which defines the inner reference point. In such a construction the spring comprises a compression spring which acts between the cone and the sensor plate to urge the cone against the cone formation, and the plate against the fulcrum.

The sensor plate may form one of a pair of closely spaced plates which together constitute the signal producing sensing means, and of which the second plate is rigidly fixed to the shaft with the fulcrum positioned between the two plates. In such a construction the plates may be adapted to constitute a capacitor, a magnetic sensor including Hall effect devices, or an inductance sensor.

An adjuster mechanism may be provided for ensuring that there is a uniform gap between the plates. This can be achieved by constructing the ball with an offset axis and providing means for rotating the ball to establish the necessary relative angular position.

In a modification the second fixed plate may be omitted, and the sensor plate may act in conjunction with an optical device.

In another construction the torque indicating member comprises a generally axially extending finger which extends towards the tube and is mounted on the shaft in a cantilever manner with the free outer end of the finger having a ball-like formation which is coupled to the lug, the finger forming a mounting for an electrical strain gauge and being resiliently deflectable by the tube to opposite sides of a mean position so that signals from the strain gauge indicate the magnitude and direction of the torque generated by bodily twisting of the shaft.

Some embodiments of our invention are illustrated in the accompanying drawings in which:-

Figure 1 is a cut-away perspective view of a torque sensor;

Figure 2 is a section on the line 2-2 of Figure 1;

Figure 3 is an electrical circuit diagram of a capacitor sensor for incorporation in the torque sensor of Figures 1 and 2;

Figure 4 is a circuit diagram similar to Figure 3 but of a circuit which enables the input voltage to be raised substantially;

Figure 5 is a graph of voltage plotted against time for the capacitor sensors of Figures 3 and 4;

Figure 6 is a transverse section showing the incorporation of a magnetic sensor in the torque sensor of Figures 1 and 2;

Figure 7 is a transverse section showing the incorporation of an inductive sensor in the torque sensor of Figures 1 and 2;

Figure 8 is a perspective view of another torque sensor; and

Figure 9 is a perspective view of a portion of the torque sensor of Figure 1 but showing a modification.

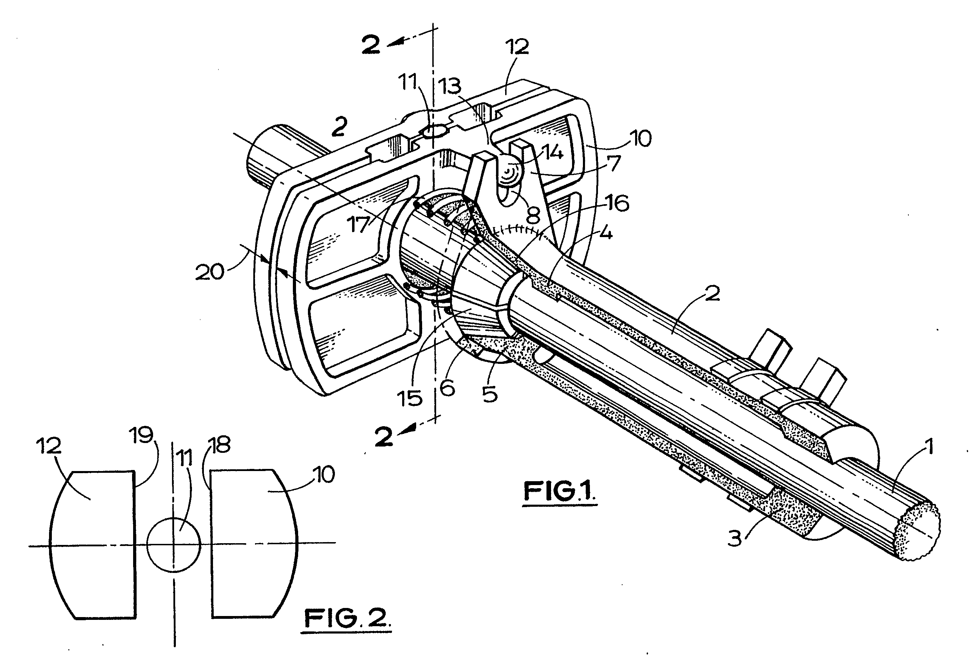

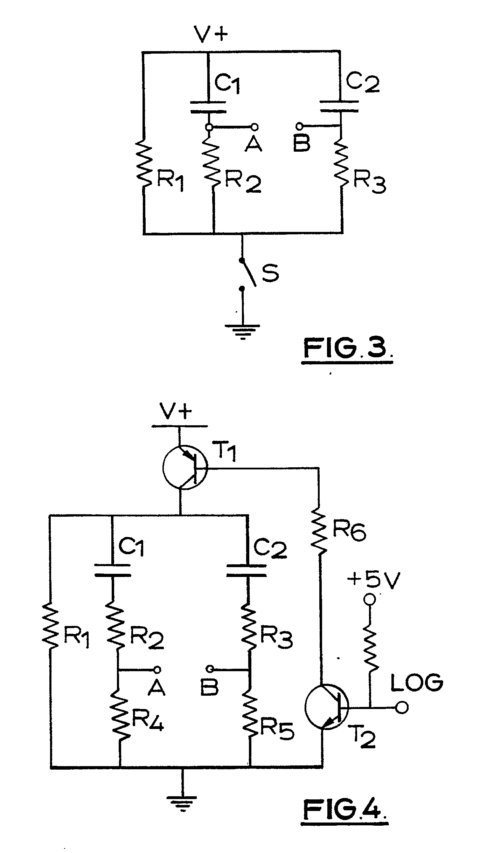

The torque sensor illustrated in Figures 1 and 2 of the accompanying drawings is adapted to measure the torque generated by bodily twisting movement of a shaft 1 about its main longitudinal axis.

As illustrated the torque sensor comprises a hollow cylindrical tube 2 which surrounds a length of the shaft 1. The tube 2 is formed at its outer free end with an internal radial thickening 3 defining fixing means by which the tube 2 at that end is fixed to the shaft 2 against relative angular and radial movement. The tube 2 is also formed at an intermediate point in its length adjacent to its inner end with a second internal radial thickening 4 in which the shaft 1 is angularly movable. The wall of the tube 2 is therefore spaced from the shaft 1 between the two thickenings 3 and 4. A portion 5 of the wall of the tube 2 between the thickening 4 and its free inner end is of frusto-conical outline and terminates in a outwardly directed radial flange 6 provided with a lever in the form of the radially projecting lug 7.

A torque indicating member 10 is mounted on the shaft 1 at a position spaced from the inner end of the tube 2. The indicating member 10 comprises a plate which is adapted to rock about a fulcrum 11 which is fixed with respect to, and lies on, a transverse axis of the shaft 1 which is normal to its longitudinal axis. The fulcrum 11 comprises a pair of diametrically opposed pins which are housed in complementary recesses in adjacent faces of the plate 10 and in a second plate 12 which is fixedly secured to the shaft 1 and is spaced from the plate 10 by a relatively small distance.

The plate 10 is formed with a forwardly extending lug 13 which lies on the axis of the fulcrum 11 and is displaced radially with respect to the longitudinal axis of the shaft 1. The lug 13 terminates in an integral ball 14, and the ball 14 is received in a radial slot 8 in the lug 7, substantially without clearance, to define a coupling between the tube 2 and the plate 10, in the form of a ball and socket connection.

In operation, since the tube 2 and the plate 12 are fixed to the shaft 1 at spaced points defining reference points, any bodily twist in the shaft 1 between these points will cause a relative angular movement to take place between the tube 2 and the shaft 1 and the relative angular movement increases progressively from the fixed end of the tube to the lug 7. Such angular movement of the lug 7 causes the plate 10 to rock about the fulcrum 11 and tilt with respect to the fixed plate 12. The tube 2 therefore acts as transmission means to translate twisting movement of the shaft 1 into non-torsional displacement of the plate 10. The tube 2 therefore transmits to the plate 10 a signal wholly dependent upon the actual bodily twist in the shaft.

It is desirable that rocking movement of the plate 10 depends only on the twist of the shaft 1 and is substantially unaffected by working clearances in the various mechanical components which also adds to noise in operation. Accordingly a split cone 15 including separate segmental parts acts between the shaft 1 and the internal face 16 of the frusto-conical inner end portion of the tube 2, and a conical compression spring 17 abuts at opposite ends between the cone 15 and the plate 10. The spring 17 therefore acts in opposite directions to load the cone 15 against the internal face 16 to prevent radial movement of the flange 6 relative to the shaft 1 and therefore the lug 7 with respect to the plate 10, and acts to load the fulcrum 11 to remove all clearance and maintain the plate 10 as close as possible to the plate 12.

The plates 10 and 12 can be adapted in various ways to provide a signal of the magnitude and direction of torque generated as a result of bodily twisting movement of the shaft between the two reference points.

In one construction in which the plates 10 and 12 are adapted to act as an electrical capacitor sensor, both plates 10 and 12 are constructed of electrically non-conducting material, and adjacent opposed surfaces 18,19 are coated with electrically conducting material to form a pair capacitors. The capacitors are disposed on opposite sides of the axis of the fulcrum 11, and a gap 20 between the surfaces 18,19 forms the dielectric.

Rocking movement of the plate 10 about the fulcrum 11 in response to angular movement of the tube 2 as described above, urges the surfaces 18,19 closer together on one side of the axis of the fulcrum 11 and wider apart on the other side. The resulting difference in capacitance of the pairs of surfaces 18,19 can be detected by a circuit similar to that illustrated in Figure 3 of the accompanying drawings.

In the circuit illustrated in Figure 3 of the drawings the capacitors $C_1$ and $C_2$ are formed by the conducting surfaces 18,19 of the plates 10,12 on opposite sides of the fulcrum 11, and the switch S is a transistor switch controlled from a computer or electronic control module (not shown), conveniently from a peripheral port of the computer. The switch S may be constituted by one of the bits in the port itself which, in such a case, is assumed to have open collector outputs. Specifically, when the bit is at logic low (zero), the peripheral pin acts as a current sink and is represented by the switch S closed. When the bit is at logic high (one) the peripheral pin presents a high impedance and is represented by the switch S open.

While the switch S is open, both capacitors charge to V+ through the resistors $R_1$,$R_2$ and $R_3$.

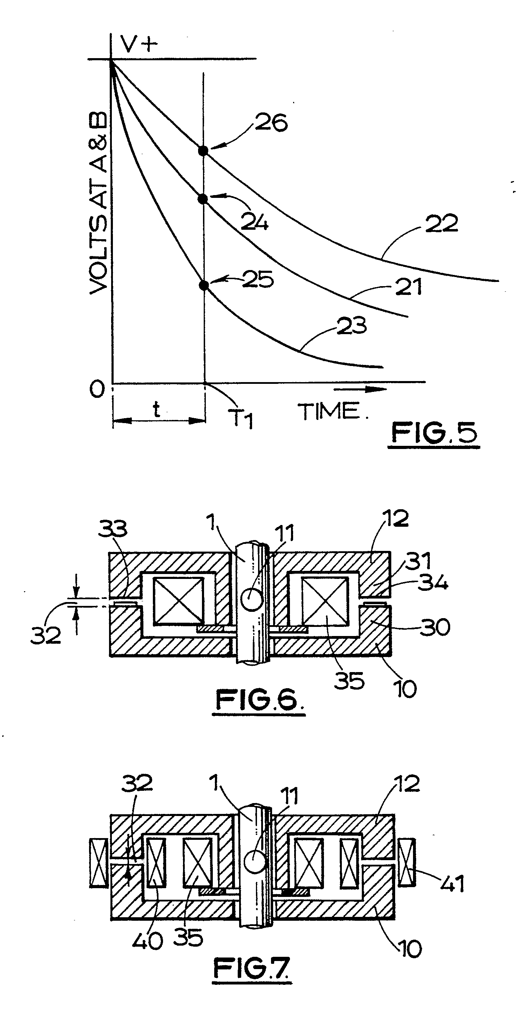

The effect of the switch closing is illustrated in the graph of Figure 5 in which the voltage at points A and B is plotted against a time scale (T) when the switch S closes at point 0 on the time scale. When there is no twist in the shaft 1, the plates 10 and 12 are parallel and the capacitors $C_1$ and $C_2$ are substantially equal in value. They discharge according to graph 21 of Figure 5. Application of torque tilts the plate 10 abut the fulcrum 11 with respect to the plate 12 and $C_1$ and $C_2$ are now different. They discharge according to the graphs 22 and 23 respectively. Which capacitor $C_1$ or $C_2$ has the low rate depends upon the direction in which the plate 10 has been tilted which, in turn, depends upon the direction of twist in the shaft 1. The difference in the rates of discharge depends upon the extent by which the plate 10 has been tilted, and therefore upon the magnitude of the torque.

The computer or control module has an "on chip" analogue to digital converter with a sample and hold facility. It is therefore equipped to "read" the voltages at A and B which are present at a fixed time (t) and at points 24,25 and 26 after the switch S closes. By this means the software can deduce the value of the shaft torque.

In another layout the voltages at A and B are fed to a difference amplifier which produces an output voltage change proportional to the difference of A and B in a direction corresponding to the sign of that difference. The computer or control module then "reads" that output through a single analogue to digital converter channel.

There are many possible circuits but they all have the effect of presenting to the computer or control module the variations in discharge rates of the capacitors $C_1$ and $C_2$ in a form useful for deducing the torque.

As shown in the circuit illustrated in Figure 4 the voltage V+ may be raised to an suitably high value to increase the time constant of the capacitor discharge while maintaining a reasonable current in the resistors. As illustrated high voltage transistors $T_1$ and $T_2$ control the capacitor voltages and these are in turn connected to the peripheral port bit as in the circuit of Figure 3, namely the LOGIC terminal. The voltages at the points A and B are reduced to a suitable range by the addition of resistors $R_4$ and $R_5$ in series with the resistors $R_2$ and $R_3$. The pairs of resistors $R_2/_4$ and $R_3/R_5$ define potential dividers, but the resistors $R_1$,$R_2$ and $R_3$ still perform their original functions as in the circuit of Figure 3. In this circuit, however, the outputs of A and B rise when $T_1$ and $T_2$ are turned on by the LOGIC. This means that the exponential curves 21,22 and 23 are now inverted, but the overall effect is the same.

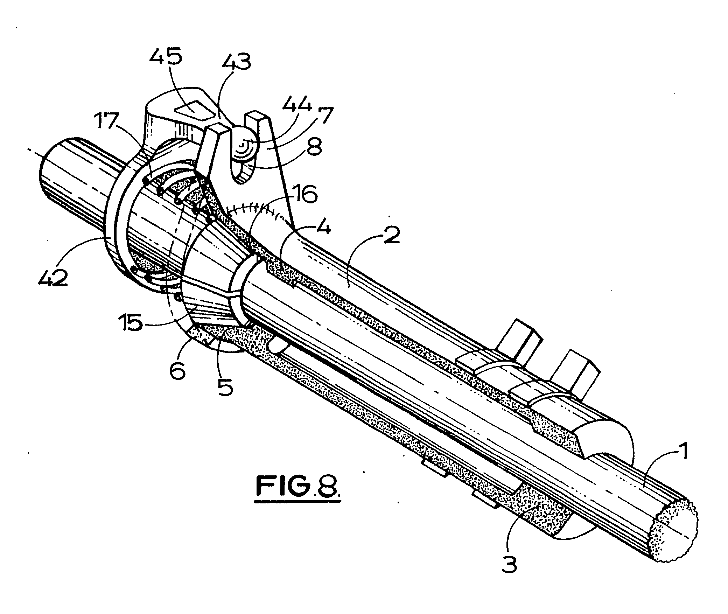

The plates 10 and 12 can be adapted to produce a magnetic sensor. As illustrated in Figure 6 of the accompanying drawings the plates 10 and 12 are made from a ferro-magnetic material, to define pole pieces 30 and 31. The pole pieces 30 and 31 are separated by a small clearance 32 and two Hall effect sensors 33 and 34 are fixed to the poles of the pole piece 31.

The Hall effect sensors 33 and 34 comprise silicon devices which produce changes in output voltage in response to changes in a magnetic field passage through them.

A coil 35 carries an electric current to create the magnetic field. In a zero torque position when no twist is imported to the shaft 1 the magnetic field is shared equally between the poles and equal voltages are therefore produced at the Hall effect devices 33 and 34. When a torque is applied, causing the pole piece 30 to tilt relative to the pole piece 31, the gaps 32 are unequal and the magnetic field is no longer distributed evenly. The magnitude and direction of the torque can be deduced as described above with reference to Figures 3-5, from the voltages produced by the Hall effect devices 33 and 34.

The current in the coil 35 may be A.C. or D.C.. If it is A.C. the Hall effect devices 33, 34 must be read in phase. This is conveniently done if the current is turned on by a computer peripheral port and the sensors "read" at a fixed time after turn on when the magnetic field has had time to build up. After the reading the current can be turned off until the next one. One advantage of A.C. is that failure of the circuit can be tested more easily by the computer. The Hall sensor readings are constantly varying even when the torque is constant or even zero so the system can easily be checked for "life".

The plates 10 and 12 can also be adapted to produce an inductance sensor. As illustrated in Figure 7 of the drawings the Hall effect devices are replaced by inner and outer annular detector coils 40 and 41 surrounding each pole piece.

In this construction the energising current in the coil 35 must be A.C. and the way the field is distributed between the gaps 32 between the poles is detected by the coils 40 and 41 which act as a differential transformer or displacement transducer.

In a modification of the torque sensors illustrated in the drawings and described above, the extent of torque may be determined optically by the use of a suitable device which determines the relative rotational movement between the plates 10 and 12. This measurement may be direct or by the use of a mirror mounted on the plate 10 to deflect a light beam relative to photo-electric sensor mounted elsewhere on the shaft 1 at a convenient location.

In the latter construction the fixed plate may be omitted so that the fulcrum 11 must be fixed to the shaft by other means.

In the modified construction illustrated in Figure 8 of the accompanying drawings the plates 10 and 12 and the fulcrum 11 are omitted, and the spring 17 abuts against a radial shoulder 42 on the shaft 1 which forms the mounting for a generally axially extending finger 43. The finger 43 is mounted on the shaft 1 in a cantilever manner substantially in alignment with, and extending towards, the slot 15 in the lug 7. The free end of the finger 43 has a ball-like formation 44 which is received in the slot 15 to form a ball and socket joint. The finger 43 forms a mounting for an electrical strain gauge 45 and is resiliently deflectable in opposite directions to form a neutral zero torque position when a twist is applied to the shaft 1. Signals from the strain gauge 45 give a reading of the magnitude and direction of the torque.

The torque sensors described above are adapted for use particularly with servo mechanism of the electric drive type. In such mechanisms the signals of torque from the sensors are utilised to affect operation of an electric motor in turn to augment the torsional output force from the shaft 1. Such servo mechanisms may be utilised in vehicle power steering system to augment the steering effort applied to the shaft 1 which, in such a construction, comprises the steering shaft to the outer end of which a steering wheel is coupled.

In the embodiments described above the tube 2 transmits to the plate 10 a signal wholly dependent upon the actual bodily twist in the shaft.

In a modification the fixing means defined by the radial thickening 3 is replaced by a torsionally elastic portion, and the motor is also coupled to the tube 2. The tube 2 will therefore transmit to the plate 10 a signal dependent upon the twist in the shaft 1 minus the input from the motor. In such a construction the torque sensor will produce a difference or error signal between the two reference points, namely the input to the shaft and the input to the tube from the motor.

In the embodiment described above it is essential that the gap between the plates 10 and 12 is uniform, particularly in the embodiment of Figures 1 and 2 in which the plates act as an electrical capacitor sensor.

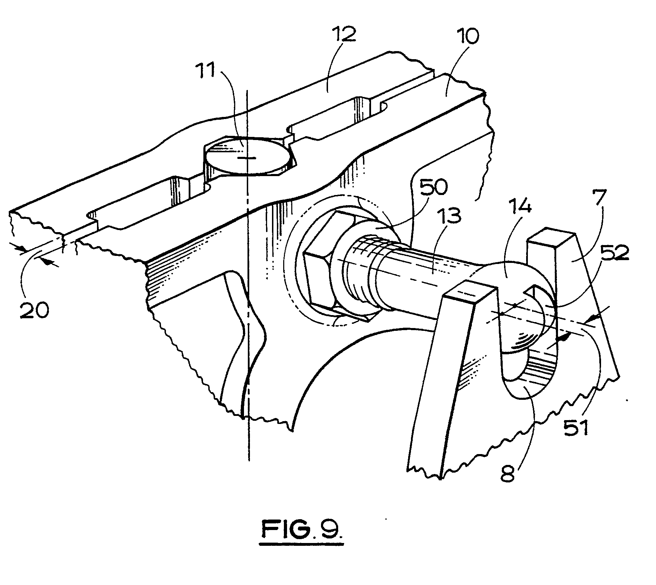

Figure 9 illustrates a fine adjustment feature to enable the uniformity of the gap 20 in the null position to be adjusted in order to achieve a null signal in the zero torque position. As illustrated the lug 13 is formed as a stem which is threaded at its inner end so that it can be screwed into a complementary threaded opening in the plate 10 through a lock-nut 50. The ball 14 is slightly eccentric and has a small offset 51 from the main longitudinal axis of the stem 13. The ball 14 also has a slot 52 to receive the blade of a screw driver and by means of which the ball 14 can be rotated about the axis of the stem 13 and then locked with the nut 50. By these means we can adjust, as necessary, the attitude of the plate 10 with respect to the plate 12.

## Claims

1. A torque sensor responsive to bodily twisting movement of a shaft (1) about its main longitudinal axis characterised by a torque indicating member (10) adapted to be displaced with respect to a neutral position in response to twisting movement of the shaft, and transmission means (2) for translating a signal dependent upon twisting movement of the shaft into non-torsional displacement of the torque indicating member (10).

2. A torque sensor according to claim 1, characterised by sensing means for measuring the non-torsional displacement of the torque indicating member (10) to produce a signal dependent upon the measure of torque produced by the twisting movement.

3. A torque sensor according to claim 1 or claim 2, characterised in that the transmission means (2) is so constructed and arranged that the extent by which the indicating member (10) is displaced depends upon the magnitude of the signal dependent upon the extent of twist in a given length of the shaft (1) between two reference points (3, 4).

4. A torque sensor according to claim 3, characterised in that the transmission means (2) comprises a tube arranged to surround the shaft (1) and coupled at one end (3) to the shaft, and a force transmitting coupling (13, 14, 15) is provided between a point on the tube (2) spaced axially from the said one end and the torque indicating member (10) and through which the said signal is transmitted to the torque indicating member.

5. A torque sensor according to claim 3 or claim 4, characterised in that the two reference points (3, 4) on the shaft (1) comprise the location (3) at which the tube is coupled to the shaft, and a second point (4) on the shaft (1) spaced longitudinally from the inner end of the tube (2) remote from the said one end.

6. A torque sensor according to claim 4, characterised in that the tube (2) is fixed to the shaft (1) at the said one end by fixing means (3) so that a twist in the shaft causes a relative angular movement to occur between the inner end of the tube remote from the fixing means and the shaft, whereby the signal is wholly dependent upon the actual bodily twist in the shaft.

7. A torque sensor according to claim 5, characterised in that a motor is coupled both to the tube (2) and the shaft (1), and the tube (2) is coupled to the shaft (1) at the said one end by means of a torsionally elastic portion (3) so that the tube transmits to the torque indicating member a signal dependent upon the twist in the shaft (1) minus the input from the motor, whereby the sensor produces a difference or error signal between the input to the shaft and the input to the tube.

8. A torque sensor according to any of claims 4-7, characterised in that the force transmitting coupling (13, 14, 15) comprises a lever in the form of a radial lug (7) on the tube (2) which projects radially outwards from the inner end of the tube (2), and coupling means (14, 15) for coupling the lug to the torque indicating member (10).

9. A torque sensor according to claim 8, characterised in that the coupling means (14, 15) comprises a universal joint.

10. A torque sensor according to claim 9, characterised in that the universal joint comprises a radial slot (8) in the lug (7) defining a socket, and a ball (14) on the torque indicating member (10) which is received in the slot substantially without clearance.

11. A torque sensor according to any of claims 8-10, characterised in that the tube (2) is supported at its inner end by support means (15-17) in such a manner that radial movement of the lug (7) with respect to the shaft (1) is substantially prevented.

12. A torque sensor according to claim 11, characterised in that the support means comprises a split cone or collet (15) which bears on an internal cone (16) formation at the inner end of the tube (2) and on the shaft (1), in combination with a spring (17) acting on the outer end of the cone which is of greater area to urge the cone inwardly relatively towards the outer end of the tube.

13. A torque sensor according to claim 12, characterised in that the torque indicating (10) member comprises a sensor plate (10) mounted for rocking movement about a transverse axis which is normal to be longitudinal axis of the shaft (1) and is fixed with respect to the shaft (1), and the transverse axis comprises a fulcrum (11) which defines the inner reference point.

14. A torque sensor according to claim 13, characterised in that the spring (17) comprises a compression spring which acts between the cone (15) and the sensor plate (10) to urge the cone against the cone formation (16), and the plate (10) against the fulcrum (11).

15. A torque sensor according to claim 13 or claim 14, characterised in that the sensor plate (10) forms one of a pair of closely spaced plates (10, 12) which together constitute the signal producing sensing means, and of which the second plate (12) is rigidly fixed to the shaft (1) with the fulcrum (11) positioned between the two plates.

16. A torque sensor according to claim 15, characterised in that the plates (10, 12) are adapted to constitute at least a pair of capacitors.

17. A torque sensor according to claim 15, characterised in that the plates (10, 12) are adapted to constitute a magnet sensor including Hall effect devices.

18. A torque sensor according to claim 15, characterised in that the plates (10, 12) are adapted to constitute an inductance sensor.

19. A torque sensor according to any of claims 13-18, characterised in that an adjuster mechanism (50-52) is provided to ensure that there is a uniform gap between the plates (10, 12) in order to achieve a null signal in the zero torque position.

20. A torque sensor according to claim 19, characterised in that the ball (14) has an offset axis (51) and means (52) are provided for rotating the ball (14) to establish the necessary relative angular position in order to achieve the null signal.

21. A torque sensor according to claim 13 or claim 14, characterised in that the sensor plate (10) acts in conjunction with an optical device.

22. A torque sensor according to any of claims 4-12, characterised in that the torque indicating member (10) comprises a generally axially extending finger (43) which extends towards the tube (2) and is mounted on the shaft in a cantilever manner with the free outer end of the finger having a ball-like formation (44) which is coupled to the lug (7), the finger forming a mounting for an electrical strain gauge (45) and being resiliently deflectable by the tube (2) to opposite sides of a mean position so that signals from the strain gauge indicate the magnitude and direction of the torque generated by bodily twisting of the shaft (2).

FIG.1.

FIG.2.

EP 0 403 236 A2

FIG.3.

FIG.4.

**FIG.5**

**FIG.6.**

**FIG.7**

FIG.8.

EP 0 403 236 A2

FIG.9.